# EUROPEAN PATENT APPLICATION

(11) **EP 1 995 881 A1**
(43) Date of publication of application: **26.11.2008**
(21) Application number: 07014517.2
(22) Date of filing: 24.07.2007
(51) Int. Cl.: H04B 1/18, H02H 9/04

(54) **Radio-frequency apparatus with electrostatic discharge protection**

(30) Priority: 22.05.2007 CN 200710104090
(71) Applicant: High Tech Computer Corp., Tao Yuan (TW)
(72) Inventor: Huang, Wan-Hsiang, Taoyuan City Taoyuan County 330 (TW); Chen, Yun-Ta, Taoyuan City Taoyuan County 330 (TW)
(74) Representative: Arth, Hans-Lothar

(57) **Abstract**

A radio-frequency apparatus with electrostatic discharge (ESD) protection is provided. The radio-frequency apparatus including an antenna, an inductor, a capacitor and a radio-frequency circuit receives a radio-frequency signal by the antenna. When the radio-frequency signal is transmitted to the radio-frequency apparatus, an electrostatic signal may invade into the radio-frequency apparatus via the antenna. Here, the radio-frequency signal can be transmitted and the electrostatic signal can be blocked by the capacitor, while the radio-frequency signal can be blocked and the electrostatic signal can be transmitted by the inductor. Therefore, when an ESD event occurs, the electrostatic signal is transmitted to ground through the inductor. Furthermore, the impedance value of the capacitor remains in a first range and that of the inductor remains in a second range, such that the electrostatic signal with a specific voltage is blocked by an impedance matching circuit formed by the capacitor and the inductor.

## Description

### BACKGROUND OF THE INVENTION

### Field of the Invention

The present invention relates to a radio-frequency apparatus with electrostatic discharge protection. More particularly, the present invention relates to a radio-frequency apparatus employing a circuit architecture formed by a capacitor and an inductor to realize electrostatic discharge protection and impedance matching.

### Description of Related Art

Main reasons that cause damages to integrated circuits (ICs) are electrostatic discharge (ESD) events occurring during the fabricating of the ICs or after the fabrication of the chips. Therefore, the ICs are usually required to have electrostatic discharge protection function, so as to prevent external electrostatic signals from damaging the ICs. For example, when current radio-frequency apparatuses including wireless transceivers, mobile phones, and global positioning system (GPS) receive and transmit radio frequency signals with antenna, the ESD events caused by the transmission paths provided by the antenna must be taken into consideration as well.

In view of the above reasons, conventional radio-frequency apparatuses have different electrostatic discharge protection measures for different types of antennae. For example, when a conventional radio-frequency apparatus uses a planar inverted-F antenna as a path to receive or transmit radio-frequency signals, as the planar inverted-F antenna is designed with a grounding path, the conventional radio-frequency apparatus can make use of the grounding path of the planar inverted-F antenna to prevent external electrostatic signals influencing the internal radio-frequency circuit in case that the ESD event occurs. However, the planar inverted-F antenna has the problem that the bandwidth is too narrow in use. Relatively, when the planar inverted-F antenna is employed in the conventional radio-frequency apparatus to enhance the electrostatic discharge protection function, the antenna performance of the radio-frequency apparatus is limited by the planar inverted-F antenna, and cannot be improved.

In addition, the conventional radio-frequency apparatus can also use a monopole antenna to receive and transmit radio-frequency signals. At this time, the conventional radio-frequency apparatus uses a mechanism to wrap the monopole antenna, such that the monopole antenna is away from the periphery of a case of the radio-frequency apparatus. As such, the monopole antenna cannot provide a transmission path to the external electrostatic signals, so the conventional radio-frequency apparatus will have the electrostatic discharge protection function. However, as consumer electronic products are becoming light, short, and small, the distance between the monopole antenna and the periphery of the case must be reduced. If the method that uses the mechanism to wrap the monopole antenna is used, the conventional radio-frequency apparatus cannot be miniaturized.

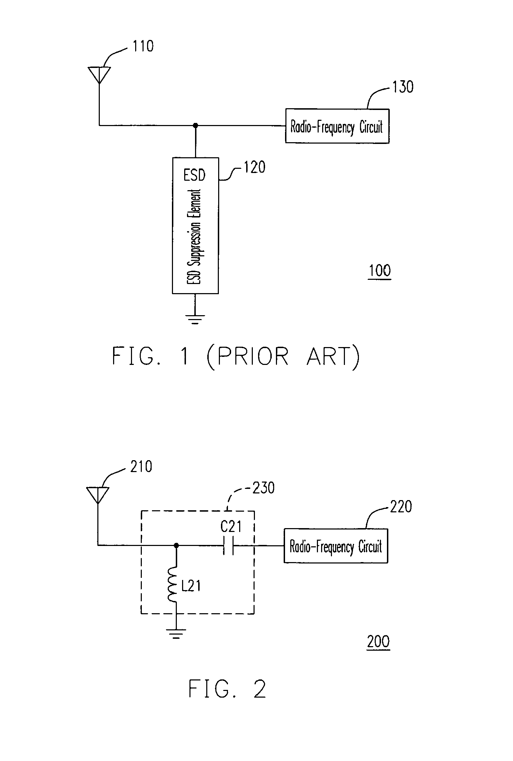

Another method employs an ESD suppression element. For example, FIG. 1 shows a conventional radio-frequency apparatus 100 with electrostatic discharge protection function, which uses an antenna 110 to receive signals. When an ESD event occurs, the electrostatic signal is transmitted to the ground through an ESD suppression element 120, so as to prevent the electrostatic signal damaging a radio-frequency circuit 130. However, current electronic components that can serve as the ESD suppression element 120, such as low-capacitance varistors or polymer ESD suppressers, are often too expensive. In addition, the conventional radio-frequency apparatus 100 using the conventional ESD suppression element 120 to realize the electrostatic discharge protection cannot pass Class 3 (air discharge +/-8 kv) test conditions of IEC61000-4-2 test standards. In other words, the electrostatic discharge protection performance of the conventional radio-frequency apparatus 100 using the conventional ESD suppression element 120 is very poor.

### SUMMARY OF THE INVENTION

The present invention is directed to a radio-frequency apparatus with electrostatic discharge protection, which employs a circuit architecture formed by a capacitor and an inductor to discharge an electrostatic signal to ground and reduce loss of a radio-frequency signal in the radio-frequency apparatus.

The present invention is also directed to a radio-frequency apparatus with electrostatic discharge protection, which prevents an electrostatic signal from invading into the radio-frequency apparatus through a built-in antenna or an external antenna and damaging circuit performance of the radio-frequency apparatus.

The present invention is also directed to a radio-frequency apparatus with electrostatic discharge protection, which has the features of miniaturization and improved performance of the radio-frequency apparatus.

The present invention provides a radio-frequency apparatus with electrostatic discharge protection. The radio-frequency apparatus including an antenna, an inductor, a capacitor and a radio-frequency circuit receives a radio-frequency signal with use of the antenna, and a frequency of the radio-frequency signal remains in a specific range. In addition to the radio-frequency signal, an unexpected electrostatic signal may invade into the radio-frequency apparatus via the antenna. Here, since the capacitor can transmit the radio-frequency signal and block the electrostatic signal, the radio-frequency circuit may receive the radio-frequency signal correspondingly with the antenna. In another aspect, since the inductor can transmit the electrostatic signal and block the radio-frequency signal, when an ESD event occurs, the electrostatic signal is transmitted to ground through the inductor. Furthermore, an impedance value of the capacitor remains in a first range, while an impedance value of the inductor remains in a second range, such that the electrostatic signal with a specific voltage is blocked by an impedance matching circuit formed by the capacitor and the inductor.

In an embodiment of the present invention, as the specific voltage is +/-8kv, the impedance value of the capacitor in the first range is smaller than or equal to 39 pF, while the impedance value of the inductor in the second range is smaller than or equal to 56 nH. In addition, it should be noted that the frequency of the radio-frequency signal in the specific range is higher than or equal to 750 MHz.

The present invention further provides a radio-frequency apparatus with electrostatic discharge protection. The radio-frequency apparatus includes a built-in antenna, a radio-frequency switch, a first inductor, a capacitor, and a radio-frequency circuit. The radio-frequency switch has a fixed connecting end, a preset connecting end, and a signal connecting end. The preset connecting end provides a connecting path to an external antenna, and the radio-frequency switch enables the signal connecting end to electrically connect one of the fixed connecting end and the preset connecting end according to a connecting state of the preset connecting end. Thus, the radio-frequency apparatus receives a radio-frequency signal from the built-in antenna or the external antenna according to the connecting state of the preset connecting end, and the frequency of the radio-frequency signal remains in a specific range.

When the radio-frequency signal or the electrostatic signal is transmitted to the signal connecting end, given that an impedance value of the capacitor remains in a first range and an impedance value of the first inductor remains in a second range, the capacitor is then used to transmit the radio-frequency signal and to block an electrostatic signal from invading into the radio-frequency circuit, and the first inductor is used to conduct the electrostatic signal to ground and to block the radio-frequency signal from being conducted to the ground. Furthermore, the electrostatic signal with a specific voltage is blocked by an impedance matching circuit formed by the capacitor and the first inductor.

In an embodiment of the present invention, the radio-frequency apparatus further includes a second inductor and an impedance matching circuit. The second inductor is electrically connected between the built-in antenna and the ground, so as to directly transmit the electrostatic signal entering into the radio-frequency apparatus via the built-in antenna to the ground, such that the electrostatic signal cannot invade into the radio-frequency circuit. The impedance matching circuit is electrically connected between the built-in antenna and the radio-frequency switch, such that an impedance of the built-in antenna matches with an impedance of the radio-frequency switch. Additionally, the impedance matching circuit formed by the capacitor and the first inductor enables the impedance of the built-in antenna or the external antenna to match with an impedance of the radio-frequency circuit.

The present invention further provides a radio-frequency apparatus with electrostatic discharge protection. The radio-frequency apparatus includes a built-in antenna, a radio-frequency switch, a first inductor, a second inductor, a capacitor, and a radio-frequency circuit. The radio-frequency switch has a fixed connecting end, a preset connecting end, and a signal connecting end. The preset connecting end provides a connecting path to an external antenna, and the radio-frequency switch enables the signal connecting end to electrically connect one of the fixed connecting end and the preset connecting end according to a connecting state of the preset connecting end. Thereby, the radio-frequency circuit receives a radio-frequency signal from the built-in antenna or the external antenna according to the connecting state of the preset connecting end, and the frequency of the radio-frequency signal remains in a specific range. Note that an electrostatic signal may invade into the radio-frequency apparatus via the built-in antenna or the external antenna.

When the radio-frequency signal or the electrostatic signal is transmitted to the signal connecting end, given that an impedance value of the capacitor remains in a first range and impedance values of the first and the second inductors remain in a second range, the capacitor is then used to transmit the radio-frequency signal to the radio-frequency circuit and to block the electrostatic signal from invading into the radio-frequency circuit. The first inductor and the second inductor are used to transmit the electrostatic signal to ground and to block the radio-frequency signal from being conducted to the ground. Furthermore, the electrostatic signal with a specific voltage is blocked by an impedance matching circuit formed by the capacitor, the first inductor and the second inductor.

As the present invention uses the circuit architecture formed by the inductor and the capacitor, the radio-frequency apparatus has the electrostatic discharge protection effect, so it is unnecessary to maintain the distance between a monopole antenna and a case. In addition, as the circuit architecture formed by the inductor and the capacitor has the impedance matching function, compared with the conventional art, the present invention not only has a reliable electrostatic discharge protection effect, but also has the advantages of miniaturization and improved performance of the radio-frequency apparatus.

In order to make the aforementioned features and advantages of the present invention comprehensible, preferred embodiments accompanied with the drawings are described in detail below.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 shows a conventional radio-frequency apparatus with electrostatic discharge protection function.

FIG. 2 is a schematic structural view of a radio-frequency apparatus with electrostatic discharge protection according to an embodiment of the present invention.

FIG. 3 is a schematic structural view of a radio-frequency apparatus with electrostatic discharge protection according to another embodiment of the present invention.

FIG 4 is a schematic structural view of an impedance matching circuit according to the embodiment depicted in FIG. 3.

FIG. 5 is a schematic structural view of a radio-frequency apparatus with electrostatic discharge protection according to still another embodiment of the present invention.

FIG. 6 is a schematic structural view of a radio-frequency apparatus with electrostatic discharge protection according to yet still another embodiment of the present invention.

### DESCRIPTION OF EMBODIMENTS

FIG 2 is a schematic structural view of a radio-frequency apparatus with electrostatic discharge protection according to an embodiment of the present invention. Referring to FIG. 2, a radio-frequency apparatus 200 includes an antenna 210, an inductor L21, a capacitor C21, and a radio-frequency circuit 220. The inductor L21 is electrically connected between the antenna 210 and the ground, and the capacitor C21 is electrically connected between the antenna 210 and the radio-frequency circuit 220.

Hereinafter, the operation of the radio-frequency apparatus 200 is described. The radio-frequency apparatus 200 receives a radio-frequency signal through a path provided by the antenna 210, and a frequency of the radio-frequency signal remains in a specific range. When the radio-frequency signal enters the radio-frequency apparatus 200, as the capacitor C21 is a low impedance with respect to the radio-frequency signal, and the inductor L21 is a high impedance with respect to the radio-frequency signal, the capacitor C21 can transmit the radio-frequency signal, and the inductor L21 can block the radio-frequency signal. In other words, the capacitor C21 transmits the radio-frequency signal received by the antenna 210 to the radio-frequency circuit 220, while the inductor L21 is able to prevent the radio-frequency signal from leaking to the ground when the radio-frequency signal is transmitted to the radio-frequency circuit 220. As such, the radio-frequency circuit 220 and the antenna 210 are capable of receiving the radio-frequency signal correspondingly.

In another aspect, when an ESD event occurs, an external electrostatic signal may enter the radio-frequency apparatus 200 through the path provided by the antenna 210. At this time, the capacitor C21 is a high impedance with respect to the electrostatic signal, and the inductor L21 is a low impedance with respect to the electrostatic signal. Accordingly, the inductor L21 can transmit the electrostatic signal, and the capacitor C21 can block the electrostatic signal. Thereby, the inductor L21 can directly conduct the electrostatic signal to the ground through the path between the antenna 210 and the radio-frequency circuit 220, and the capacitor C21 disposed on the path between the antenna 210 and the radio-frequency circuit 220 can block the electrostatic signal from invading into the radio-frequency circuit 220 via the antenna 210.

In view of the above, when the radio-frequency apparatus 200 receives the radio-frequency signal through the antenna 210, the electrostatic signal may also invade into the radio-frequency apparatus via the antenna 210, and the radio-frequency circuit 220 suppresses the electrostatic signal and receives the radio-frequency signal through the inductor L21 and the capacitor C21, respectively, so as to realize the electrostatic discharge protection. In another aspect, the inductor L21 and the capacitor C21 together form an impedance matching circuit 230 between the antenna 210 and the radio-frequency circuit 220, so as to reduce loss of the radio-frequency in the radio-frequency apparatus 200. Here, when an impedance value of the inductor L21 remains in a first range and an impedance value of the capacitor C21 remains in a second range, the electrostatic signal with a specific voltage can be blocked by the impedance matching circuit 230 formed by the inductor L21 and the capacitor C21. It should be noted that the frequency of the radio-frequency signal in the specific range is higher than or equal to 750 MHz, and thus the radio-frequency apparatus 200 is applicable to bandwidths of global system for mobile (GSM), GPS, British Telecommunications (BT), KDDI, and other communication standards including CDMA, WCDMA, Blue Tooth, WiFi, DVB-H and WiMax. Moreover, as the specific voltage of the electrostatic voltage is +/-8kv, the impedance value of the capacitor C21 in the first range is smaller than or equal to 39 pF, while the impedance value of the inductor L21 in the second range is smaller than or equal to 56 nH. That is to say, the electrostatic discharge protection effect of the radio-frequency apparatus 200 at least can pass Class 3 (air discharge +/-8 kv) test conditions of IEC61000-4-2 test standards. If the impedance values of the inductor L21 and the capacitor C21 are further reduced, the radio-frequency apparatus 200 can pass Class 4 (air discharge +/-15 kv) of the IEC61000-4-2 test standards. In another aspect, the antenna 210 can be a monopole antenna or a wideband antenna.

However, persons skilled in the art shall know that when the radio-frequency apparatus 200 operates at different bandwidths, i.e., receives radio-frequency signals of different frequencies, by adjusting the specific range for limiting the impedance values of the inductor L21 and the capacitor C21, the radio-frequency apparatus 200 can realize the effects of electrostatic discharge protection and impedance matching. The above values are only an embodiment of the present invention, and are not intended to limit the scope of the present invention. In addition, as the type of the antenna varies with the development of science and technology, the type of the antenna 210 is not limited to the above example as well.

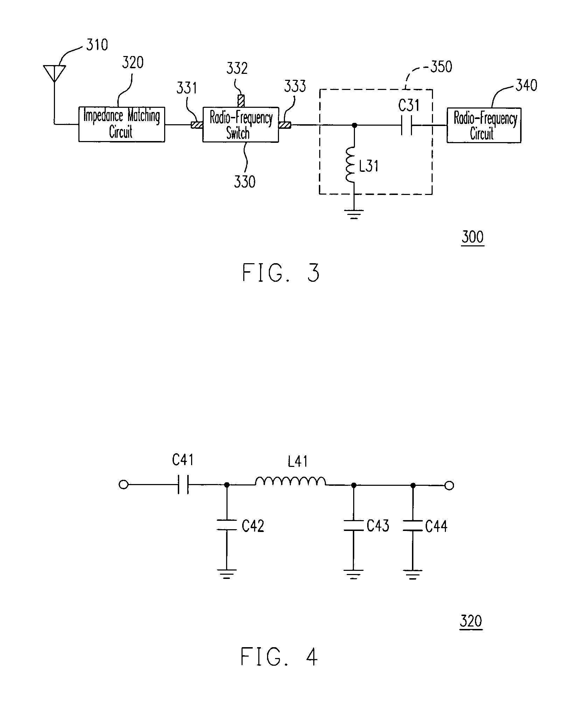

FIG. 3 is a schematic structural view of a radio-frequency apparatus with electrostatic discharge protection according to another embodiment of the present invention. Referring to FIG. 3, the radio-frequency apparatus 300 includes a built-in antenna 310, an impedance matching circuit 320, a radio-frequency switch 330, an inductor L31, a capacitor C31, and a radio-frequency circuit 340. The impedance matching circuit 320 is electrically connected between the built-in antenna 310 and a fixed connecting end 331 of the radio-frequency switch 330. The inductor L31 is electrically connected between a signal connecting end 333 of the radio-frequency switch 330 and ground. The inductor C31 is electrically connected between the signal connecting end 333 of the radio-frequency switch 330 and the radio-frequency circuit 340.

Here, the impedance matching circuit 320 is used to match the impedance of the built-in antenna 310 with the impedance of the radio-frequency switch 330, so as to reduce loss of the radio-frequency signal in the radio-frequency apparatus 300. A preset connecting end 332 of the radio-frequency switch 330 is used to provide a connecting path to an external antenna (not shown). When the external antenna is electrically connected to the preset connecting end 332, the signal connecting end 333 of the radio-frequency switch 330 is electrically connected to the preset connecting end 332. Otherwise, the signal connecting end 333 is electrically connected to the fixed connecting end 331. In other words, the radio-frequency switch 330 enables the radio-frequency signal received by the built-in antenna 310 or the external antenna to be transmitted to the signal connecting end 333 according to a connecting state of the preset connecting end 332. The frequency of the radio-frequency signal remains in a specific range, and an electrostatic signal may invade into the radio-frequency apparatus via the built-in antenna 310 or the external antenna.

Then, as the capacitor C31 has the function of transmitting the radio-frequency signal and blocking the electrostatic signal, the capacitor C31 disposed on a path between the radio-frequency switch 330 and the radio-frequency circuit 340 is able to conduct the radio-frequency signal received by the built-in antenna 310 or the external antenna to the radio-frequency circuit 340 and to block the electrostatic signal from invading into the radio-frequency circuit 340, such that the radio-frequency circuit 340 can cooperate with the built-in antenna 310 or the external antenna to receive the radio-frequency signal correspondingly. In another aspect, as the inductor L31 has the function of conducting the electrostatic signal and blocking the radio-frequency signal, when an ESD event occurs, the inductor L31 is able to directly conduct the electrostatic signal to the ground through the path between the radio-frequency switch 330 and the radio-frequency circuit 340 and to prevent the electrostatic signal from entering the radio-frequency circuit 340, thereby realizing the electrostatic discharge protection while the radio-frequency signal can still be transmitted to the radio-frequency circuit 340. It should be noted that an impedance matching circuit 350 between the radio-frequency switch 330 and the radio-frequency circuit 340 is formed by the inductor L31 and the capacitor C31, so as to reduce the loss of the radio-frequency signal in the radio-frequency apparatus 300. Here, when an impedance value of the inductor L31 remains in a first range, and an impedance value of the capacitor C31 remains in a second range, the electrostatic signal with a specific voltage can be blocked by the impedance matching circuit 350 formed by the inductor L31 and the capacitor C31.

According to the radio-frequency apparatus 200 described in the previous embodiment, the frequency of the radio-frequency signal in the specific range is higher than or equal to 750 MHz. Besides, as the specific voltage of the electrostatic voltage is +/-8kv, the impedance value of the capacitor C31 in the first range is smaller than or equal to 39 pF, while the impedance value of the inductor L31 in the second range is smaller than or equal to 56 nH. Therefore, according to the above setting, the radio-frequency apparatus 300 is applicable to GSM, GPS, BT, KDDI, and other communication standards including CDMA, WCDMA, Blue Tooth, WiFi, DVB-H and WiMax, and the electrostatic discharge protection at least can pass Class 3 (air discharge +/-8 kv) test conditions of IEC61000-4-2 test standards. In another aspect, the built-in antenna 310 can be a monopole antenna or a wideband antenna.

However, persons skilled in the art would understand that the radio-frequency apparatus 300, when operating at different bandwidths, i.e., receiving radio-frequency signals of different frequencies, can realize the effects of electrostatic discharge protection and impedance matching by adjusting the specific range for limiting the impedance values of the inductor L31 and the capacitor C31. The above values are exemplary, and are not intended to limit the scope of the present invention. In addition, as the type of antenna varies with the development of science and technology, the type of the built-in antenna 310 is not limited to the above examples as well.

Furthermore, FIG. 4 is a schematic structural view of the impedance matching circuit according to the embodiment depicted in FIG 3. Referring to FIG. 4, the impedance matching circuit 320 includes capacitors C41-C44 and an inductor L41. The capacitor C41 is electrically connected to the built-in antenna 310. The inductor L41 is electrically connected between the capacitor C41 and the radio-frequency switch 320. Moreover, two ends of the capacitor C42 are electrically connected to a first end of the inductor L41 and the ground, respectively. Two ends of each of the capacitors C43 and C44 are connected to a second end of the inductor L41 and the ground respectively. Here, the impedance matching circuit 320 can match the impedance of the built-in antenna 310 with the impedance of the radio-frequency switch 330 by adjusting the impedance values of the capacitors C41-C44 and the inductor L41, so as to reduce the loss of the radio-frequency signal in the radio-frequency apparatus 300.

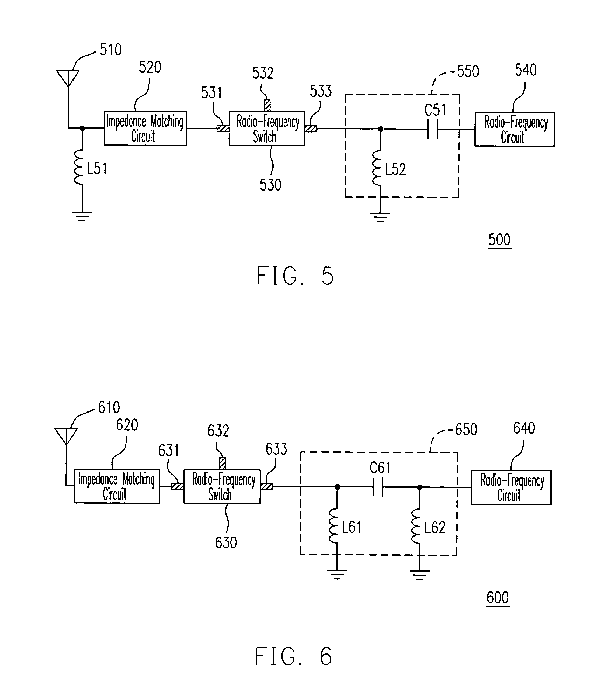

FIG 5 is a schematic structural view of a radio-frequency apparatus with electrostatic discharge protection according to still another embodiment of the present invention. Referring to FIG. 5, a radio-frequency apparatus 500 includes a built-in antenna 510, an impedance matching circuit 520, a radio-frequency switch 530, inductors L51 and L52, a capacitor C51, and a radio-frequency circuit 540. The electrical connection and the working principle of the radio-frequency apparatus 500 are similar to those of the radio-frequency apparatus 300, i.e., the impedance matching circuit 520 is used to match the impedance of the built-in antenna 510 with the impedance of the radio-frequency switch 530. The radio-frequency switch 532 enables a signal connecting end 533 to be electrically connected to one of a fixed connecting end 531 and the preset connecting end 532 according to whether a preset connecting end 532 is electrically connected to an external antenna (not shown). Thus, the radio-frequency apparatus 500 can receive a radio-frequency signal through the built-in antenna 510 or the external antenna, and the frequency of the radio-frequency signal remains in a specific range. Here, an electrostatic signal may invade into the radio-frequency apparatus 500 via the built-in antenna 510 or the external antenna.

When the radio-frequency signal or the electrostatic signal is transmitted to the signal connecting end 533, given that an impedance value of the capacitor C51 remains in a first range and an impedance value of the inductor L52 remains in a second range, as the capacitor C51 can transmit the radio-frequency signal and block the electrostatic signal, the capacitor C51 disposed on a path between the radio-frequency switch 530 and the radio-frequency circuit 540 is able to transmit the radio-frequency signal received by the built-in antenna 510 or the external antenna to the radio-frequency circuit 540 and to block the electrostatic signal from invading into the radio-frequency circuit 540, such that the radio-frequency circuit 540 can cooperate with the built-in antenna 510 or the external antenna to receive the radio-frequency signal correspondingly. By contrast, as the inductor L52 can transmit the electrostatic signal and block the radio-frequency signal, when an ESD event occurs, the inductor L52 is able to directly conduct the electrostatic signal to the ground through the path between the radio-frequency switch 530 and the radio-frequency circuit 540, and the radio-frequency signal can still be transmitted to the radio-frequency circuit 540. In addition, an impedance matching circuit 550 between the built-in antenna 510 and the radio-frequency circuit 540 is formed by the capacitor C51 and the inductor L51, and the electrostatic signal with a specific voltage can be blocked by the impedance matching circuit 550.

However, the main difference between the radio-frequency apparatus 500 and the radio-frequency apparatus 300 is that the inductor L51 is further configured in the radio-frequency apparatus 500. As the inductor L51 can transmit the electrostatic signal and block the radio-frequency signal, the inductor L51 is able to directly conduct the electrostatic signal which invades into the radio-frequency apparatus via the built-in antenna 510 to the ground through the path between the built-in antenna 510 and the radio-frequency switch 530. By contrast, the radio-frequency signal received by the built-in antenna 510 is not affected and can still enter the radio-frequency switch 530 through the impedance matching circuit 520. Thereby, the electrostatic discharge protection effect of the radio-frequency apparatus 500 can be improved. Other details of this embodiment have been described in the above embodiments, and are not described again hereinafter.

FIG 6 is a schematic structural view of a radio-frequency apparatus with electrostatic discharge protection according to yet still another embodiment of the present invention. Referring to FIG. 6, a radio-frequency apparatus 600 includes a built-in antenna 610, an impedance matching circuit 620, a radio-frequency switch 630, inductors L61 and L62, a capacitor C61, and a radio-frequency circuit 640. The impedance matching circuit 620 is electrically connected between the built-in antenna 610 and a fixed connecting end 631 of the radio-frequency switch 630. Two ends of the capacitor C61 are electrically connected between a signal connecting end 633 of the radio-frequency switch 630 and the radio-frequency circuit 640. The inductor L61 is electrically connected between a first end of the capacitor C61 and the ground, and the inductor L62 is electrically connected between a second end of the capacitor C61 and the ground.

Hereinafter, the operation of the radio-frequency apparatus 600 is further described. The impedance of the built-in antenna 610 matches the impedance of the radio-frequency switch 630 through the impedance matching circuit 620. In addition, a preset connecting end 632 of the radio-frequency switch 630 provides a connecting path to an external antenna (not shown), and the radio-frequency switch 630 enables the signal connecting end 633 to electrically connect a fixed connecting end 631 or the preset connecting end 632 according to whether the preset connecting end 632 is electrically connected to the external antenna. In other words, the radio-frequency switch 600 can transmit the radio-frequency signal received by the built-in antenna 610 or the external antenna to the signal connecting end 633 according to a connecting state of the preset connecting end 632. The frequency of the radio-frequency signal remains in a specific range. However, an electrostatic signal may also invade into the radio-frequency apparatus via the built-in antenna 610 or the external antenna.

Then, given that an impedance value of the capacitor C61 remains in a first range and impedance values of the inductors L61 and L62 remain in a second range, as the capacitor C61 has the function of transmitting the radio-frequency signal and blocking the electrostatic signal, the capacitor C61 disposed on a path between the radio-frequency switch 630 and the radio-frequency circuit 640 is able to transmit the radio-frequency signal received by the built-in antenna 610 or the external antenna to the radio-frequency circuit 640, such that the radio-frequency circuit 640 can cooperate with the built-in antenna 610 or the external antenna to receive the radio-frequency signal correspondingly. On the other hand, as the inductors L61 and L62 can transmit the electrostatic signal and block the radio-frequency signal, when an ESD event occurs, the inductors L61 and L62 are able to directly conduct the electrostatic signal to the ground through the path between the radio-frequency switch 630 and the radio-frequency circuit 640, and the radio-frequency signal can still be transmitted to the radio-frequency circuit 640. It should be noted that an impedance matching circuit 650 between the radio-frequency switch 630 and the radio-frequency circuit 640 is formed by the capacitor C61 and the inductors L61 and L62, and the electrostatic signal with a specific voltage can be blocked by the impedance matching circuit 650.

In addition, the frequency of the radio-frequency signal in the specific range is higher than or equal to 750 MHz. Moreover, as the specific voltage of the electrostatic voltage is +/-8kv, the impedance value of the capacitor C61 in the first range is smaller than or equal to 39 pF, while the impedance values of the inductors L61 and L62 in the second range are smaller than or equal to 56 nH. Therefore, according to the above settings, the radio-frequency apparatus 600 is applicable to bandwidths of GSM, GPS, BT, KDDI, and other communication standards including CDMA, WCDMA, Blue Tooth, WiFi, DVB-H and WiMax, and the electrostatic discharge protection at least can pass Class 3 (air discharge +/-8 kv) test conditions of IEC61000-4-2 test standards. Other details of this embodiment have been described in the above embodiments, and are not described herein again.

However, it should be noted that in the radio-frequency apparatus 600, an inductor, similar to the inductor L51 of FIG. 5, can be added between the built-in antenna 610 and the ground. The inductor is able to directly conduct the electrostatic signal entering the radio-frequency apparatus via the built-in antenna 610 to the ground through the path between the built-in antenna 610 and the radio-frequency switch 630. By contrast, the radio-frequency signal received by the built-in antenna 610 is not affected and can still be transmitted to the impedance matching circuit 620. Thus, the inductor electrically connected between the built-in antenna 610 and the ground can improve the electrostatic discharge protection effect of the radio-frequency apparatus 600.

To sum up, the present invention uses the circuit architecture formed by the inductor and the capacitor to guide the electrostatic signal to be discharged to the ground, so as to prevent the ESD event from damaging the radio-frequency apparatus. In addition, the circuit architecture formed by the inductor and the capacitor has the effect of impedance matching, so as to effectively reduce the loss of the radio-frequency signal in the radio-frequency apparatus. Compared with the conventional radio-frequency apparatus, the present invention can realize the electrostatic discharge protection and impedance matching by exclusively using the circuit architecture formed by the capacitor and the inductor. Thus, it is unnecessary to maintain the distance between the antenna and the case for avoiding the ESD. Therefore, in addition to realizing a reliable electrostatic discharge protection effect, the present invention also has the advantages of miniaturization and improved performance of the radio-frequency apparatus.

It will be apparent to persons of ordinary art in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A radio-frequency apparatus with electrostatic discharge protection, comprising:
an antenna, for receiving a radio-frequency signal, wherein a frequency of the radio-frequency signal remains in a specific range;
a radio-frequency circuit, cooperating with the antenna to receive the radio-frequency signal correspondingly;
a capacitor, electrically connected between the antenna and the radio-frequency circuit, for transmitting the radio-frequency signal to the radio-frequency circuit; and
an inductor, electrically connected between the antenna and a ground, for blocking the radio-frequency signal from entering the ground,
wherein an impedance value of the capacitor remains in a first range, and an impedance value of the inductor remains in a second range, such that the capacitor is able to block an electrostatic signal from invading into the radio-frequency circuit when the electrostatic signal with a specific voltage is conducted via the antenna, and that the inductor is able to conduct the electrostatic signal to the ground.

2. The radio-frequency apparatus with electrostatic discharge protection as claimed in claim 1, wherein the frequency of the radio-frequency signal in the specific range is higher than or equal to 750 MHz, as the specific voltage of the electrostatic voltage is +/-8kv, the impedance value of the capacitor in the first range is smaller than or equal to 39 pF, and the impedance value of the inductor in the second range is smaller than or equal to 56 nH.

3. The radio-frequency apparatus with electrostatic discharge protection as claimed in claim 1, wherein the antenna is a monopole antenna or a wideband antenna.

4. The radio-frequency apparatus with electrostatic discharge protection as claimed in claim 1, wherein an impedance matching circuit formed by the capacitor and the inductor enables the impedance of the antenna to match the impedance of the radio-frequency circuit.

5. A radio-frequency apparatus with electrostatic discharge protection, comprising:
a built-in antenna;
a radio-frequency switch, having a fixed connecting end, a preset connecting end, and a signal connecting end, wherein the fixed connecting end is electrically connected to the built-in antenna, the preset connecting end provides a connecting path to an external antenna, and the radio-frequency switch enables a radio-frequency signal received by the built-in antenna or the external antenna to be transmitted to the signal connecting end according to a connecting state of the preset connecting end, a frequency of the radio-frequency signal remaining in a specific range;
a radio-frequency circuit, cooperating with the built-in antenna or the external antenna to receive the radio-frequency signal correspondingly;
a capacitor, having a first end electrically connected to the signal connecting end, and a second end electrically connected to the radio-frequency circuit, for transmitting the radio-frequency signal to the radio-frequency circuit; and
a first inductor, electrically connected between the first end of the capacitor and a ground, for blocking the radio-frequency signal from entering the ground,
wherein an impedance value of the capacitor remains in a first range, and an impedance value of the first inductor remains in a second range, such that the capacitor is able to block an electrostatic signal from invading into the radio-frequency circuit when the electrostatic signal with a specific voltage is conducted via the antenna, and that the first inductor is able to conduct the electrostatic signal to the ground.

6. The radio-frequency apparatus with electrostatic discharge protection as claimed in claim 5, further comprising:
a second inductor, electrically connected between the second end of the capacitor and the ground, for blocking the radio-frequency signal from entering the ground and for conducting the electrostatic signal to the ground, wherein an impedance value of the second inductor also remains in the second range.

7. The radio-frequency apparatus with electrostatic discharge protection as claimed in claim 6, wherein an impedance matching circuit formed by the capacitor, the first inductor, and the second inductor enables the impedance of the built-in antenna to match the impedance of the radio-frequency circuit.

8. The radio-frequency apparatus with electrostatic discharge protection as claimed in claim 6, further comprising:
a third inductor, electrically connected between the built-in antenna and the ground, for blocking the radio-frequency signal from being conducted to the ground and for conducting the electrostatic signal to the ground, wherein an impedance value of the third inductor also remains in the second range.

9. The radio-frequency apparatus with electrostatic discharge protection as claimed in claim 8, wherein the frequency of the radio-frequency signal in the specific range is higher than or equal to 750 MHz, as the specific voltage of the electrostatic signal is +/-8kv, the impedance value of the capacitor in the first range is smaller than or equal to 39 pF, and the impedance values of the first, the second, and the third inductors in the second range are smaller than or equal to 56 nH.

10. The radio-frequency apparatus with electrostatic discharge protection as claimed in claim 5, further comprising:
an impedance matching circuit, electrically connected between the built-in antenna and the radio-frequency switch, for enabling the impedance of the built-in antenna to match the impedance of the radio-frequency switch.
